Europäisches Patentamt

European Patent Office

Office européen des brevets

(11) Publication number: **0 127 279**
**B1**

## (12) EUROPEAN PATENT SPECIFICATION

(45) Date of publication of patent specification: **11.11.87**

(21) Application number: **84301965.4**

(22) Date of filing: **23.03.84**

(51) Int. Cl.⁴: **G 01 B 15/04,** G 01 B 15/02

(54) **Strip profile gauge.**

(30) Priority: **21.04.83 GB 8310890**

(43) Date of publication of application:
**05.12.84 Bulletin 84/49**

(45) Publication of the grant of the patent:
**11.11.87 Bulletin 87/46**

(84) Designated Contracting States:
**AT BE CH DE FR IT LI LU NL SE**

(56) References cited:
**EP-A-0 065 361**
**GB-A-1 552 224**

(73) Proprietor: **FAG KUGELFISCHER GEORG
SCHÄFER Kommanditgesellschaft auf Aktien
Georg-Schäfer-Strasse 30 Postfach 1260
D-8720 Schweinfurt (DE)**

(72) Inventor: **Smith, Kenneth Browning
2 Millborough Road
Tuffley Gloucester (GB)**
Inventor: **Adams, Derek William
208 Old Bath Road
Cheltenham Gloucester GL53 9EQ (GB)**

(74) Representative: **Pears, David Ashley et al
REDDIE & GROSE 16 Theobalds Road
London WC1X 8PL (GB)**

Courier Press, Leamington Spa, England.

## Description

The present invention relates to a strip profile gauge of the type in which the strip, e.g. steel or aluminium strip emerging from a roll stand, passes between a source of penetrating radiation and at least one detector of the radiation. The detector signal, suitably calibrated, provides a measure of the thickness of the strip. If measurements are made across the width of the strip, the profile of the strip is obtained. This provides the information necessary to effect adjustment of the roll stand so as to achieve the desired profile. Industry today demands rolled strip of extremely high quality in all respects, including profile, and satisfactory results require automatic, real-time control of the roll stand. As will become apparent below, this is not an easy matter and numerous profile gauge arrangements have been proposed in an attempt to overcome the problems.

One problem is how to achieve adequate speed of response. Rolled strip may be travelling at as much as 25 metres per second and, unless profile measurements can be obtained quickly enough, stable closed loop control of the roll stand will be impossible. A related problem is that it must somehow be possible to achieve a sufficient number of measurements across the width of the strip to provide a sufficient indication of profile. Other problems are concerned with achieving an adequate signal to noise ratio. Finally, it must be feasible to manufacture the arrangement chosen, at a reasonable price.

One known profile gauge comprises a C frame with the radiation source mounted on one limb and a single detector on the other. The complete frame is reciprocated horizontally so that the beam of radiation passing from the source to the detector scans backwards and forwards, across the width of the strip. The inertia of the reciprocated structure makes it impossible to achieve a rapid scanning rate and the apparatus is not suitable for real time, closed loop control. A scan may take up to ten seconds, during which time the strip may well have travelled more than 200 metres.

In an attempt to overcome this problem proposals have been made (EP—A—0 065 361) to reciprocate only the source of radiation. On the opposite side of the strip there is mounted either a row of detectors or a single, elongated detector providing a signal which can be interpreted against a time base established by the scanning motion of the source. EP—A—0 065 361 notes the problems when using a plurality of detectors, including the fact that the number of detectors may be such as to give an inadequate number of measurements across the width of the strip. Even with these improved arrangements it is difficult to achieve a rapid scan. The mass to be reciprocated is still substantial as the source consists of a radio isotope in heavy shielding. There are other, fundamental problems in using radio isotopes. In the first place, isotopes with suitable energy levels and adequate half lives are not available for all common strip materials and thicknesses. Moreover, increasing the scanning speed is equivalent to decreasing the collecting aperture of the radiation detector and the signal to noise ratio suffers accordingly. EP—A—0 065 361 suggests a linear array of radio isotope sources in order to enhance the output. This increases the expense and the mass to be reciprocated significantly.

Because of the difficulties with the scanning types of gauge described above the present inventors have previously proposed an arrangement which uses static sources and detectors (GB—A—1 552 224). Here the sources are preferably X-ray tubes arranged to produce fan-shaped beams with their width across the strip and their narrow dimension along the direction of travel of the strip. Two beams may be employed to cover the width of a strip, e.g. 1.2 metres. On the opposite side of the strip there is a row of fixed detectors. This arrangement has the advantage that measurements are instantaneous and true real time operation is therefore possible. However the problem remains of obtaining a sufficient number of measurements across the width of the strip. One proposal in GB—A—1 552 224 is to stagger the detectors so that more may be fitted into the row. Even so, the resolution across the width of the strip is not as good as desired and the arrangement becomes expensive, less reliable and more expensive to maintain.

The object of the present invention is to provide an improvement over GB—A—1 552 224 or EP—A—0 065 361, with a better combination of advantages than any of the prior proposals discussed above.

According to the present invention there is provided a strip profile gauge as defined in claim 1 below.

As in GB—A—1 552 224, there may be two sources of radiation in order to cover the width of the strip. In GB—A—1 552 224, some of the detectors at the centre of the strip are irradiated by both sources. This is true in particular of the centre detector which is used to provide a reference measurement whereby profile may be displayed as deviation from the reference. The two X-ray sources have to be pulsed alternately in order that the commonly illuminated detectors may be able to distinguish between the two sources. In the present invention, however, it is preferred to operate the sources continuously, i.e. as D.C. sources rather than pulsed sources. The signal to noise ratio of a D.C. source is appreciably better than that of a pulsed source. It is still possible to use a centre reference detector if the beams are staggered slightly in the longitudinal direction of the strip. Each may then irradiate a fixed detector at the centre of the strip, or they may irradiate a single detector of enlarged aperture.

Many arrangements are possible for reciprocating moving detectors on the opposite side of the strip from the radiation sources. The means adopted must naturally take into account fixed centre detectors if these are employed. A convenient mechanism for reciprocating the detectors is a reciprocally driven belt. As will be explained in more detail below, each detector may scan only a corresponding part of the strip width or the detectors may all scan the whole strip width with their scanning cycles out of phase so that, for each mechanical cycle, a plurality of scans is achieved.

The invention thus enables the use of heavy, shielded sources of radiation which do not have to be reciprocated. On the other hand, only a small number of detectors have to be used and they are light enough to be reciprocated very much more rapidly than any of the structures employed in the scanning arrangements hitherto proposed. A scanning speed of around 2 metres per second can be achieved, representing an order of magnitude improvement over the prior art first discussed above.

Another advantage of the preferred arrangement using D.C. X-ray sources is that the energy of the source can be adjusted for differing thicknesses and materials of the strips. This is a considerable advantage over gauges using radio isotope sources which, as noted above, are not available with suitable energy levels and half lives. A D.C. X-ray source also provides the best signal to noise ratio.

The invention will now be described in more detail, by way of example, with reference to the accompanying drawings, in which:

Fig. is a diagram illustrating the principle of a scanning detector,

Fig. 2 illustrates the output signal provided by a detector in one scan of a strip,

Fig. 3 illustrates a bar chart representation of a profile,

Fig. 4 shows an embodiment using two X-ray sources and two detectors,

Figs. 5 to 8 are plan views showing various possibilities for movement of the two detectors, and

Fig. 9 is a perspective view of a preferred detector.

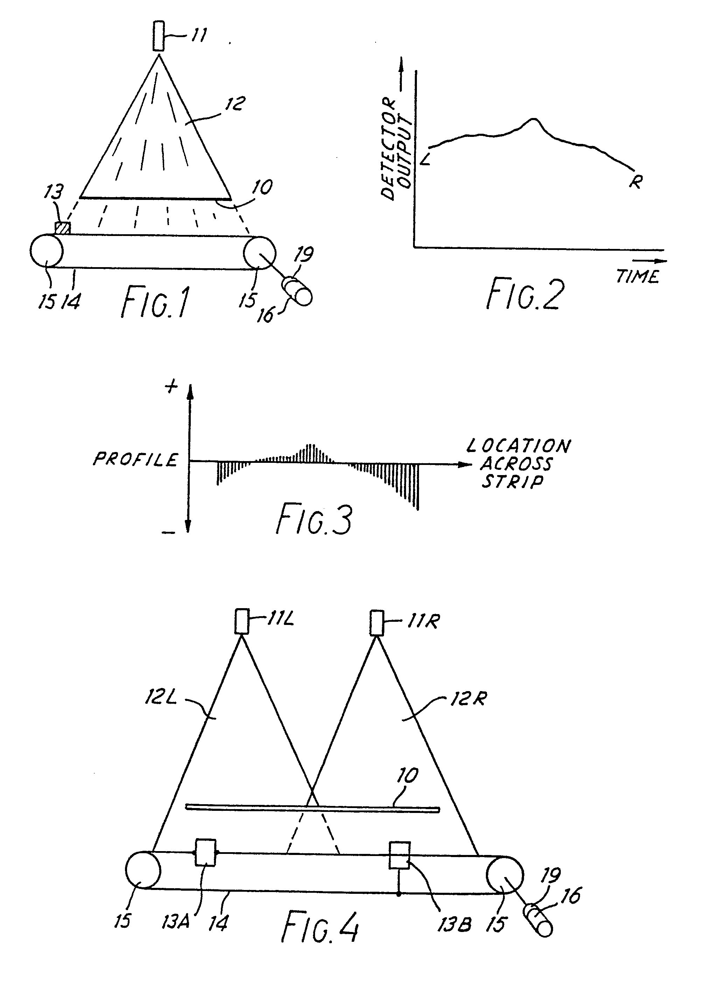

Fig. 1 shows a strip 10 of steel, for example, in transverse section. The strip is moving into (or out of) the plane of the paper. Above the strip is mounted an X-ray tube 11 with slotted shaping rings arranged to provide a fan-shaped curtain 12 of radiation extending widthwise across the strip 10. The narrow dimension of the beam is in the direction of strip movement. A proportion of the radiation passes through the strip, dependent upon the thickness, composition and temperature of the strip. Below the strip there is arranged a detector means 13 providing a signal representative of the received radiation. The detector means 13 is mounted on an arrangement for reciprocating the detector rapidly across the width of the strip, illustrated as a belt 14 passing round two pulleys 15, one of which is driven by a high speed, reversible stepping motor 16. In the actual embodiment of the invention (Fig. 4) there are two detectors.

The output signal from the detector may be as illustrated in Fig. 2 which shows a signal obtained during a left-to-right transverse of a strip which is rather thinner to the right than the left and has a thickness bump along the centre. The signal, suitably processed, may be used to display the profile and/or to control the roll stand itself so as to eliminate profile errors. The present invention is not concerned with these matters. The display of signals from scanning type gauges is well known in the art as is the processing to take account of the exponential relationship between thickness and transmitted radiation, dependence on strip material and temperature, and so on. It is also well known to subtract the measurement from a centre detector so that the display is not a thickness display but a profile display of deviation from the centre reference thickness. It is also well known to store correcting coefficients pertaining to different locations across the strip. (One source of the need for such coefficients is the varying ray angle across the strip width.) These coefficients are determined with thickness standards inserted in the beam. All these matters are discussed at some length in GB—A—1 552 224.

The preferred technique in the present state of the art is to sample and digitize the detector signal. All processing can then be effected digitally in a microprocessor. The sampling is synchronised with the movement of the detector. "Leaky bucket" integration of the samples is employed in well known manner, the samples are processed as outlined in the preceeding paragraph, including subtraction of a centre thickness, and the result is a series of values which may be regarded as a bar chart of the strip profile, as illustrated in Fig. 3.

The way in which the measurements provided by the gauge are employed does not form part of the present invention. Among the possibilites are to display the signal of Fig. 2 or, better, Fig. 3 to enable an operator to adjust the roll stand manually, to record the data for subsequent use and to use a servo mechanism which responds to the profile values to effect automatic control of the roll stand so as to achieve the required bump-free, nearly uniform but slightly cigar-shaped profile for the strip.

It is necessary to exclude signals obtained when the detector means 13 is outside the width of the strip 10. This may be done in known manner by ignoring signals exceeding a certain level. Alternatively the stroke of the detector means 13 may be adjusted to match the strip width by suitable control of the motor 16.

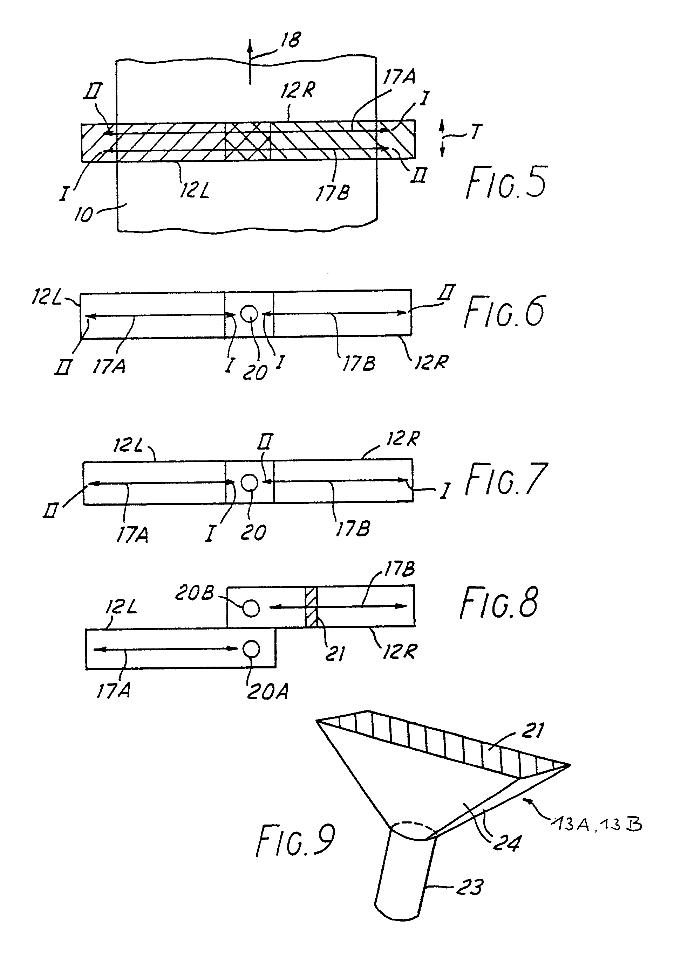

It will commonly be desirable to use two X-ray tubes 11L and 11R as shown in Fig. 4 wherein the reference numerals are supplemented with the letters L and R to denote left and right. Two detectors 13A and 13B are attached to the top and bottom runs respectively of the belt 14 so that as the detector 13A moves right the detector 13B moves left, and vice versa. Two detectors could also be used with a single source 11. Fig. 5 is a plan diagram of one possible arrangement in which the detectors both move over the whole width along longitudinally spaced tracks 17A and 17B respectively, within the rectangle which is illuminated by the sources 11L and 11R and is denoted by two overlapping hatched rectangles 12L, 12R, i.e. cross sections of the X-ray curtains. An arrow 18 shows the movement of the strip 10. When the detector 13A is at the ends of its track marked I and II the detector 13B is at the opposite ends respectively of its track, again marked I and II. This convention is used in the remaining diagrams.

Except when they cross at the centre, the data samples obtained simultaneously from the two detectors 13A and 13B do not correspond to the same positions across the track width. This creates no problem at all in a microprocessor implementation. The position of the belt 14 is given by a position transducer 19 incorporated in the motor 16 and, for each belt position the position of each transducer is known and the sample can be assigned to a corresponding memory location.

Fig. 5 makes apparent a problem which arises if the detectors 13A and 13B are required to cross each other. The curtain thickness T must be great enough to illuminate both of the longitudinally displaced detectors. The problem becomes more acute when it is required to employ a fixed centre detector which provides a continuous centre signal. This is usually desirable. The arrangements of Figs. 6 to 8 may therefore be preferred. In each of these Figures, each detector scans only half of the strip. For simplicity Figs. 6 to 8 are simplified relative to Fig. 5 in omitting the hatching and not showing the strip 10.

Fig. 6 shows a fixed centre detector 20 flanked by the tracks 17A and 17B of the two detectors moving in contrary motion, as in Fig. 5, i.e. fixed to different runs of the belt 14 as in Fig. 4. Fig. 7 differs from Fig. 6 only in that the detectors move in sympathy, which means that they are fixed to the same belt run.

All the arrangements described so far suffer from possible problems in that there is a central region of overlap in which the detectors receive energy from both sources 11L, 11R. Since it is preferred to improve the signal-to-noise ratio by D.C. operation of the sources, ambiguities cannot be eliminated as in GB—A—1 552 224 by pulsing the sources in antiphase. Fig. 8 shows the preferred arrangement in which the signals from the two sources are kept distinct by longitudinal displacement of the beams 12L and 12R, and correspondingly of the detector tracks 17A and 17B. The labels I and II are omitted in Fig. 8; either of the schemes of Figs. 6 and 7 may be employed. Each beam has its own fixed centre detector 20A, 20B and the signals from these may be combined, or a single fixed centre detector may receive radiation from both sources.

The detectors used in this art commonly comprise a scintillator crystal and photomultiplier tube. Such a device is conventionally of cylindrical shape with a circular aperture collecting the radiation. According to a subsidiary feature of the invention, the collecting aperture is enlarged by extending it in the direction of strip movement while keeping its dimension in the transverse direction small. In this way it is possible to achieve a good resolution in the transverse direction, while achieving a useful signal and a satisfactory signal to noise ratio.

The preferred shape of the collecting aperature is illustrated for one detector only by a shaded rectangle 21 in Fig. 8 and Fig. 9 shows the form which the detector may take. The side 24 of the detector 13A, 13B flare from the circular end of the photomultiplier tube 23 to the rectangular collecting aperture 21.

## Claims

1. A strip profile gauge comprising a source (11) of penetrating radiation providing a curtain of radiation extending, in use, widthwide across the strip (10) whose profile is to be measured, and radiation detector means (13) for receiving radiation which has penetrated the strip, characterised by a plurality of detectors (13A, 13B) and means (14, 15, 16) for reciprocating the detectors so that they provide time varying signals representative of strip profile.

2. A strip profile gauge according to claim 1, characterised in that the detectors (13A, 13B) scan the same strip width but with their scanning cycles out of phase.

3. A strip profile gauge according to claim 1, characterised in that each detector (13A, 13B) scans a part of the strip width individual thereto.

4. A strip profile gauge according to any of claims 1 to 3, characterised in that the reciprocating means comprises a reciprocally driven belt (14).

5. A strip profile gauge according to claim 4, characterised in that there are two detectors (13A, 13B) attached to different runs of the belt (14) so as to move with contrary motion.

6. A strip profile gauge according to claims 3 and 4, characterised in that the detectors (13A, 13B) are attached to the same run of the belt (14) so as to move in sympathy.

7. A strip profile gauge according to claim 3 or 6, characterised in that there is a plurality of sources (11L, 11R) of radiation providing curtains (12L, 12R) irradiating corresponding and partially overlapping strip widths, the curtains being displaced in the direction of strip movement and the detectors being correspondingly displaced.

8. A strip profile gauge according to any of claims 1 to 7, characterised in that the or each source (11, 11L, 11R) is a DC X-ray source.

9. A strip profile gauge according to any of claims 1 to 8, characterised in that each detector (13A, 13B) comprises a photomultiplier tube (23) and a collecting aperture (21) which is enlarged relative to that of the tube by extending the aperture in the direction of strip movement.

10. A strip profile gauge according to claim 1, characterised in that each detector (13A, 13B) flares from a circular end of a photo-multiplier tube (23) to a rectangular collecting aperture (21).

11. A strip profile gauge according to any of claims 1 to 10, characterised by at least one detector (20) fixed relative to the source(s) (11, 11L, 11R) and receiving radiation from the curtain(s) (12, 12L, 12R), which has penetrated the strip (10).

12. A strip profile gauge according to claim 11 insofar as dependent on claim 7, characterised in that there are two sources (11L, 11R) of radiation and two central, fixed detectors (20A, 20B) receiving radiation from the two curtains (12L, 12R) respectively where they are widthwise overlapping.

13. A strip profile gauge according to claim 12, characterised by means combining the signals from the two central, fixed detectors (20A, 20B).

14. A strip profile gauge according to claim 11 insofar as dependent on claim 7, characterised in that there are two sources of radiation (11L, 11R) and a single central, fixed detector (20) receiving radiation from both the two curtains where they are widthwise overlapping.

15. A strip profile gauge according to claim 8, wherein each detector (13A, 13B) comprises a photomultiplier tube (23) and a collecting aperture (21) which is enlarged relative to that of the tube (23) by extending the aperture in one direction, such as to provide an elongated aperture.

16. A strip profile gauge according to claim 15, characterised in that each detector (13A, 13B) flares from a circular end of the photomultiplier tube (23) to a rectangular collecting aperture (21).

17. A strip profile gauge according to claim 15 or 16, characterised in that the source (11) provides a curtain (12) of radiation extending, in use, widthwise across the strip (10) and in that the said one direction is the direction of strip movement.

18. A strip profile gauge according to claim 15 or 16, characterised in that there is, in use, relative movement between the source (11) and the detectors (13A, 13B) in a direction which is transverse to the said one direction.

**Patentansprüche**

1. Streifenprofilmeßgerät mit einer Strahlungsquelle (11) mit durchdringender Strahlung, die einen Strahlenvorhang erzeugt, der den Streifen (10), dessen Profil gemessen werden soll, der Breite nach erfaßt, und Strahlendetektoren (13) zum Empfang der Strahlung, die den Streifen durchdrungen hat, gekennzeichnet durch mehrere Detektoren (13A, 13B) und Mittel (14, 15, 16), die die Detektoren hin- und herbewegen, so daß zeitabhängige Impulse erzeugt werden, die das Streifenprofil verkörpern.

2. Streifenprofilmeßgerät gemäß Anspruch 1, dadurch gekennzeichnet, daß die Detektoren (13A, 13B) dieselbe Streifenbreite abtasten, ihre Abtastzyklen jedoch phasenverschoben sind.

3. Streifenprofilmeßgerät gemäß Anspruch 2, dadurch gekennzeichnet, daß jeder Detektor (13A, 13B) dem ihm zugehörigen Teil der Streifenbreite abtastet.

4. Streifenprofilmeßgerät gemäß einem der Ansprüche 1 bis 3, dadurch gekennzeichnet, daß die Mittel für die Hin- und Herbewegung aus einem entsprechend wechselseitig angetriebenen Riemen (14) bestehen.

5. Streifenprofilmeßgerät gemäß Anspruch 4, dadurch gekennzeichnet, daß zwei Detektoren (13A, 13B) an verschiedenen Riemenzügen (14) angebracht sind und gegenläufig angetrieben werden.

6. Streifenprofilmeßgerät gemäß Ansprüchen 3 und 4, dadurch gekennzeichnet, daß die Detektoren (13A, 13B) am gleichen Riemenzug (14) angebracht sind und gleichsinnig laufen.

7. Streifenprofilmeßgerät gemäß Anspruch 3 oder 6, dadurch gekennzeichnet, daß mehrere Strahlungsquellen (11L, 11R) Vorhänge (12L, 12R) erzeugen, die entsprechende und sich teilweise überschneidende Streifenbreiten bestreichen, wobei die Vorhänge in Richtung der Streifenbewegung verschoben und die Detektoren entsprechend mitbewegt werden.

8. Streifenprofilmeßgerät gemäß einem der Ansprüche 1 bis 7, dadurch gekennzeichnet, daß die oder jede Strahlungsquelle (11, 11L, 11R) eine Gleichstrom-Röntgenstrahlungsquelle ist.

9. Streifenprofilmeßgerät gemäß einem der Ansprüche 1 bis 8, dadurch gekennzeichnet, daß jeder Detektor (13A, 13B) eine Photovervielfacherröhre (23) und eine Sammelöffnung (21) enthält, die relativ zur Öffnung der Röhre durch Verlängerung in Richtung der Streifenbewegung vergrößert wird.

10. Streifenprofilmeßgerät gemäß Anspruch 1, dadurch gekennzeichnet, daß jeder Detektor (13A, 13B) von einem runden Ende der Photovervielfacherröhre (23) zu einer rechteckigen Sammelstrahleröffnung (21) strahlt.

11. Streifenprofilmeßgerät gemäß einem der Ansprüche 1 bis 10, dadurch gekennzeichnet, daß mindestens ein Detektor (20) relativ zur Strahlungsquelle/zu den Strahlungsquellen (11, 11L, 11R) angebracht ist und er die Strahlung, die den Streifen (10) durchdrungen hat, vom Vorhang/von den Vorhängen (12, 12L, 12R) erhält.

12. Streifenprofilmeßgerät gemäß Anspruch 11, soweit von Anspruch 7 abhängig, dadurch gekennzeichnet, daß es zwei Strahlungsquellen (11L, 11R) und zwei zentrale, befestigte Detektoren (20A, 20B) gibt, die die Strahlung von den beiden Vorhängen (12L, 12R) dort empfangen, wo sie der Breite nach überlappen.

13. Streifenprofilmeßgerät gemäß Anspruch 12, gekennzeichnet durch Mittel, die die Impulse der beiden mittig befestigten Detektoren (20A, 20B) kombinieren.

14. Streifenprofilmeßgerät gemäß Patentanspruch 11, soweit von Anspruch 7 abhängig, dadurch gekennzeichnet, daß es zwei Strahlungsquellen (11L, 11R) und einen einzelnen mittig befestigten Detektor (20) gibt, der die Strahlung von den beiden Vorhängen, wo sie der Breite nach überlappen, empfängt.

15. Streifenprofilmeßgerät gemäß Anspruch 8, dadurch gekennzeichnet, daß jeder Detektor (13A, 13B) eine Photovervielfacherröhre (23) und eine Sammelstrahleröffnung (21) enthält, die relativ zur Öffnung der Röhre (23) durch Strecken der Öffnung in eine Richtung, so daß eine verlängerte Öffnung entsteht, vergrößert wird.

16. Streifenprofilmeßgerät gemäß Anspruch 15, dadurch gekennzeichnet, daß jeder Detektor (13A, 13B) von einem runden Ende der Photovervielfacherröhre (23) zu einer rechteckigen Sammelstrahleröffnung (21) strahlt.

17. Streifenprofilmeßgerät gemäß Anspruch 15 oder 16, dadurch gekennzeichnet, daß die Strahlungsquelle (11) einen Strahlenvorhang (12) erzeugt, der sich quer über die Breite des Streifens (10) erstreckt, und daß es sich bei der besagten Richtung um die Richtung der Streifenbewegung handelt.

18. Streifenprofilmeßgerät gemäß Anspruch 15 oder 16, dadurch gekennzeichnet, daß bei Gebrauch eine Relativbewegung zwischen der Strahlungsquelle (11) und den Detektoren (13A, 13B) in eine Richtung stattfindet, die quer zur besagten Richtung verläuft.

## Revendications

1. Jauge de détermination du profil d'une bande, comprenant une source (11) de rayonnement pénétrant qui fournit un rideau de rayonnement s'étendant, en service, suivant la largeur en travers de la bande (10) dont on mesure le profil, et des moyens (13) détecteurs de rayonnement pour recevoir le rayonnement qui a pénétre dans la bande, caractérisée en ce qu'elle comprend une pluralité de détecteurs (13A, 13B) et des moyens (14, 15, 16) pour animer les détecteurs d'un mouvement de va-et-vient de façon qu'ils fournissent des signaux, variant dans le temps, représentatifs du profil de la bande.

2. Jauge selon la revendication 1, caractérisée en ce que les détecteurs (13A, 13B) explorent la même largeur de bande, mais avec leurs cycles d'exploration déphasés.

3. Jauge selon la revendication 1, caractérisée en ce que chaque détecteur (13A, 13B) explore une partie de la largeur de bande qui lui est affectée.

4. Jauge selon l'une quelconque des revendications 1 à 3, caractérisée en ce que les moyens de va-et-vient comprennent une courroie (14) entraînée dans un mouvement alternatif.

5. Jauge selon la revendication 4, caractérisée en ce qu'elle comprend deux détecteurs (13A, 13B) attachés à des brins différents de la courroie, de manière à se déplacer avec des mouvements inverses.

6. Jauge selon les revendications 3 et 4, caractérisée en ce que les détecteurs (13A, 13B) sont attachés au même brin de la courroie (14) de manière à se déplacer de la même façon.

7. Jauge selon la revendication 3 ou 6, caractérisée en ce qu'elle comprend une pluralité de sources (11L, 11R) de rayonnement qui irradient des largeurs de bande correspondantes qui se recouvrent partiellement, les rideaux étant décalés dans la direction du mouvement de la bande et les détecteurs étant décalés de façon correspondants.

8. Jauge selon l'une quelconque des revendications 1 à 7, caractérisée en ce que la ou chaque source (11, 11L, 11R) est une source de rayons X alimentés en courant continu.

9. Jauge selon l'une quelconque des revendications 1 à 8, caractérisée en ce que chaque détecteur (13A, 13B) comprend un tube photomultiplicateur (23) et une ouverture collectrice (21) qui est agrandie par rapport à celle du tube par allongement de l'ouverture dans la direction du mouvement de la bande.

10. Jauge selon la revendication 1, caractérisée en ce que chaque détecteur (13A, 13B) va en s'évasant depuis une extrémité circulaire d'un tube photomultiplicateur (23) jusqu'à une ouverture collectrice rectangulaire (21).

11. Jauge selon l'une quelconque des revendications 1 à 10, caractérisée en ce qu'elle comprend au moins un détecteur (20) fixe par rapport à la source ou aux sources (11, 11L, 11R) et recevant du rayonnement à partir du ou des rideaux (12, 12L, 12R), qui a ou ont pénétre dans la bande (10).

12. Jauge selon la revendication 11 pour autant qu'elle dépende de la revendication 7, caractérisée en ce qu'elle comprend deux sources (11L, 11R) de rayonnement et deux détecteurs centraux fixes (20A, 20B) recevant respectivement du rayonnement des deux rideaux (12L, 12R) à l'endroite où ils se recouvrent suivant la largeur.

13. Jauge selon la revendication 12, caractérisée en ce qu'elle comprend des moyens combinant les signaux des deux détecteurs centraux fixes (20A, 20B).

14. Jauge selon la revendication 11 pour autant qu'elle dépende de la revendication 7, caractérisée en ce qu'elle comprend deux sources de rayonnement (11L, 11R) et un seul détecteur central fixe (20) recevant du rayonnement des deux rideaux à l'endroit où ils se recouvrent suivant la largeur.

15. Jauge selon la revendication 8, dans laquelle chaque détecteur (13A, 13B) comprend un tube photomultiplicateur (23) et une ouverture collectrice (21) qui est agrandie par rapport à celle du tube (23) par élargissement de l'ouverture dans une direction telle qu'on a une ouverture de forme allongée.

16. Jauge selon la revendication 15, caractérisée en ce que chaque détecteur (13A, 13B) va en s'évasant depuis une extrémité circulaire du tube photomultiplicateur (23) jusqu'à une ouverture collectrice rectangulaire (21).

17. Jauge selon la revendication 15 ou 16, caractérisée en ce que la source (11) fournit un rideau (12) de rayonnement s'étandant, en service, suivant la largeur en travers de la bande (10) et en ce que la susdite direction est celle du mouvement de la bande.

18. Jauge selon la revendication 15 ou 16, caractérisée en ce qu'il y a, en service, un mouvement relatif, entre la source (11) et les détecteurs (13A, 13B), dans une direction qui est transversale par rapport à la susdite direction.

0 127 279

FIG.1

FIG.2

FIG.3

FIG.4

1

FIG.5

FIG.6

FIG.7

FIG.8

FIG.9